# EUROPÄISCHE PATENTANMELDUNG

(11) **EP 4 559 740 A1**
(43) Veröffentlichungstag der Anmeldung: **28.05.2025**
(21) Anmeldenummer: 23212350.5
(22) Anmeldetag: 27.11.2023
(51) Int. Cl.: B60N 2/02, B60N 2/08

(54) **LÄNGSVERSTELLEINRICHTUNG UND FAHRZEUGSITZ**

(71) Anmelder: Adient US LLC, Plymouth, MI 48170 (US)
(72) Erfinder: QUAST, Ingo, 40477 Duesseldorf (DE); SPRENGER, Erik, 42929 Wermelskirchen (DE); ZALAVARI, Kornel, 42659 Solingen (DE); MAYER, Thomas, 42477 Radevormwald (DE)
(74) Vertreter: Liedtke & Partner Patentanwälte

(57) **Zusammenfassung**

DLängsverstelleinrichtung (110) für einen Fahrzeugsitz (100), umfassend zumindest eine Schienenanordnung (112) mit einer festen Unterschiene (116) und einer zur Unterschiene (116) verstellbaren Oberschiene (114) sowie einer Verriegelungseinheit (120) zur lösbaren Verriegelung der Oberschiene (114) mit der Unterschiene (116), wobei die Verriegelungseinheit (120) dazu ausgebildet ist, die Oberschiene (114) und die Unterschiene (116) miteinander in einer Verriegelungsstellung (200) zu verriegeln oder zur Verstellung der Oberschiene (114) relativ zur Unterschiene (116) aus der Verriegelungsstellung (200) freizugeben, und wobei eine Überwachungseinheit (122) vorgesehen und zur Überwachung der Verriegelungsstellung (200) der Verriegelungseinheit (120) eingerichtet ist.

## Beschreibung

Die Erfindung betrifft eine Längsverstelleinrichtung mit den Merkmalen des Oberbegriffs des Anspruchs 1 sowie einen Fahrzeugsitz.

### Stand der Technik

Eine Längsverstelleinrichtung umfasst im Allgemeinen zwei im Abstand voneinander angeordnete Schienenpaare, die jeweils aus zwei Schienen, einer dem Sitz zugeordneten Oberschiene und einer dem Boden eines Fahrzeugs zugeordneten Unterschiene, aufgebaut sind. Die Längsverstelleinrichtung umfasst darüber hinaus wenigstens ein federbelastetes, bewegbares Verriegelungsteil, das an der Oberschiene gehaltert ist und in einer Verriegelungsstellung eine Bewegung der Oberschiene in der Unterschiene sperrt. Dabei kann die Unterschiene Durchbrüche aufweisen, während die Oberschiene mit Öffnungen versehen ist und das Verriegelungsteil an seinen beiden gegenüberliegenden Längsseiten Vorsprünge trägt, die in der Verriegelungsstellung durch eine Feder sowohl in die Öffnungen, als auch in die Durchbrüche bewegbar sind. Eine derartige Längsverstelleinrichtung ist beispielsweise aus dem Europäischen Patent EP 1 227 950 B1 bekannt.

### Aufgabe

Der Erfindung liegt die Aufgabe zu Grunde, eine Längsverstelleinrichtung der eingangs genannten Art zu verbessern, insbesondere hinsichtlich einer sicheren Steuerung, sowie einen entsprechenden Fahrzeugsitz bereitzustellen.

Die erstgenannte Aufgabe wird erfindungsgemäß gelöst durch eine Längsverstelleinrichtung mit den Merkmalen des Anspruchs 1. Die zweitgenannte Aufgabe wird erfindungsgemäß gelöst durch einen Fahrzeugsitz mit den Merkmalen des Anspruchs 15.

Vorteilhafte Ausgestaltungen, welche einzeln oder in Kombination miteinander eingesetzt werden können, sind Gegenstand der Unteransprüche.

Die erfindungsgemäße Längsverstelleinrichtung für einen Fahrzeugsitz umfasst zumindest eine Schienenanordnung mit einer festen Unterschiene und einer zur Unterschiene verstellbaren Oberschiene sowie einer Verriegelungseinheit zur lösbaren Verriegelung der Oberschiene mit der Unterschiene, wobei die Verriegelungseinheit dazu ausgebildet ist, die Oberschiene und die Unterschiene miteinander in einer Verriegelungsstellung zu verriegeln oder zur Verstellung der Oberschiene relativ zur Unterschiene aus der Verriegelungsstellung freizugeben, und wobei eine Überwachungseinheit vorgesehen und zur Überwachung der Verriegelungsstellung der Verriegelungseinheit eingerichtet ist.

Dadurch, dass die Verriegelungsstellung der Verriegelungseinheit mittels der Überwachungseinheit überwacht wird, kann auch bei einer nicht selbsthemmenden Längsverstellung, insbesondere bei einer elektrisch-motorisch angetriebenen Längsverstelleinrichtung die Längsverstellung sicher gesteuert, insbesondere erst nach einer Schienenverriegelung sicher gestoppt werden.

Beispielsweise ist die Überwachungseinrichtung ausgebildet und eingerichtet, zu überwachen, ob sich die Verriegelungseinheit in der Verriegelungsstellung befindet oder ob sich die Verriegelungseinheit in einer entriegelten Stellung befindet. Der Verriegelungsstatus der Verriegelungseinheit ist insbesondere für einen als Reibradantrieb ausgebildeten Antrieb von Bedeutung, da ein solch angetriebener Fahrzeugsitz aus Richtung einer Abtriebsseite gesehen nicht über eine selbsthemmende Längsverstellung verfügt. Für die Steuerung und Regelung eines solchen Reibradantriebs ist der aktuelle Status oder Zustand der Verriegelungseinheit notwendig.

Die Überwachungseinheit kann beispielsweise einen Mikroschalter umfassen, wobei der Mikroschalter über eine Betätigungseinheit mit der Verriegelungseinheit gekoppelt ist. Der Mikroschalter ist ein einfaches und nachrüstbares Element, um die Verriegelungsstellung zu ermitteln.

Die Betätigungseinheit kann beispielsweise eingerichtet sein, in Abhängigkeit von dem Verriegelungszustand der Verriegelungseinheit ein Abtastelement, insbesondere eine Abtastfeder des Mikroschalters, zu betätigen. Dabei kann die Betätigungseinheit beispielsweise einerseits direkt in Anlage an der Verriegelungseinheit stehen. Andererseits kann die Betätigungseinheit beispielsweise direkt mit dem Mikroschalter in Wechselwirkung stehen. Die Betätigungseinheit kann darüber hinaus dazu eingerichtet sein, Schaltpositionen des Mikroschalters einzustellen.

Beispielsweise kann die Betätigungseinheit eine Schaltkontur umfassen. Die Schaltkontur (auch Steuerkurve oder Steuerkontur genannt) kann beispielsweise eine Anzahl von Betätigungsabschnitten aufweisen, welche direkt in Wechselwirkung mit dem Mikroschalter stehen. Die Betätigungsabschnitte sind insbesondere eingerichtet, eine momentane Stellung der Verriegelungseinheit zu repräsentieren. Mit anderen Worten: Jedem Betätigungsabschnitt ist eine momentane Stellung der Verriegelungseinheit zugeordnet.

Beispielsweise kann ein erster Betätigungsabschnitt ausgebildet sein, den Mikroschalter zu betätigen, wenn die Verriegelungseinheit sich in der verriegelten Stellung befindet und der Fahrzeugsitz gegenüber der Unterschiene angehoben ist und die Betätigungseinheit angehoben ist.

Ein zweiter Betätigungsabschnitt kann ausgebildet sein, den Mikroschalter nicht zu betätigen, wenn sich die Verriegelungseinheit in der Verriegelungsstellung befindet, oder alternativ umgekehrt.

Ein dritter Betätigungsabschnitt kann ausgebildet sein, den Mikroschalter zu betätigen, wenn die Verriegelungseinheit sich in der entriegelten Stellung befindet, oder alternativ umgekehrt.

Ein vierter Betätigungsabschnitt kann ausgebildet sein, den Mikroschalter zu betätigen oder dessen Betätigungsstatus beizubehalten, wenn die Verriegelungseinheit sich in einer Zwischenstellung zwischen der Verriegelungsstellung und der entriegelten Stellung befindet. Beispielsweise liegt eine solche Zwischenstellung (auch nicht aktive Entriegelung oder nicht aktive Verriegelung) vor, wenn die Längsverstellung beendet werden soll und eine Verriegelungsstellung (auch Verriegelungsposition genannt) nicht exakt angefahren wurde. In einer solchen Zwischenstellung kann die Verriegelungseinheit die Oberschiene und die Unterschiene nicht verriegeln, insbesondere kann ein Verriegelungselement, zum Beispiel eine Verriegelungsklaue oder eine Verriegelungsplatte nicht in eine korrespondierende Verriegelungsaufnahmeöffnung einfallen. Auch eine solche Zwischenstellung ist mittels der Überwachungseinheit erkennbar und der Mikroschalter ist entsprechend betätigbar oder bleibt in dem aktuellen Betätigungsstatus und erzeugt ein Signal zum Beispiel für die entriegelte Stellung der Oberschiene.

Das Abtastelement kann beispielsweise flexibel ausgebildet und eingerichtet sein, die Schaltkontur zur gesteuerten Betätigung des Mikroschalters abzutasten. Insbesondere kann der Mikroschalter ein solches flexibles Abtastelement umfassen, welches die Schaltkontur zur gesteuerten Betätigung des Mikroschalters abtastet. Bei einer Betätigung der Verriegelungseinheit wird beispielsweise die Schaltkontur am Mikroschalter, insbesondere an dessen flexiblem Abtastelement, vorbeibewegt. Das flexible Abtastelement, welches direkt an der Schaltkontur anliegt, fragt über die Betätigungsabschnitte der Schaltkontur die momentane Stellung der Verriegelungseinheit indirekt ab. Das flexible Abtastelement kann beispielsweise als ein Federarm oder ein Federhebel ausgebildet sein.

Das Abtastelement kann beispielsweise als ein Federelement ausgebildet sein. Beispielsweise kann das Federelement als eine Flachformfeder oder Bandfeder ausgebildet sein. Insbesondere kann das Federelement als eine Bogenfeder ausgebildet sein. Zur Erzielung der Abtastfunktion kann das Federelement als eine Rückstellfeder ausgebildet sein.

Beispielsweise kann das Abtastelement an einem vom Mikroschalter abgewandten Ende eine Abtastspitze aufweisen. Die Abtastspitze kann beispielsweise s-förmig, u-förmig oder als ein gebogener Vorsprung ausgebildet sein. Ein der Abtastspitze gegenüberliegendes Ende des Abtastelements kann ortsfest ausgebildet sein. Beispielsweise kann das ortsfeste Ende mit dem Mikroschalter gekoppelt, insbesondere an diesem befestigt sein. Die Abtastspitze und das Federelement können insbesondere derart eingerichtet sein, dass beim Niederdrücken der Abtastspitze beim Überstreichen der Schaltkontur das Federelement in Richtung eines Schaltelements des Mikroschalters bewegbar, insbesondere drückbar, ist, wobei das Federelement mit diesem Schaltelement des Mikroschalters kontaktiert, insbesondere in Kontakt oder Eingriff gelangt, und dieses Schaltelement betätigt.

Die Schaltkontur kann beispielsweise derart ausgebildet sein, dass das Abtastelement bei einem Verstellen der Verriegelungseinheit abschnittsweise unterschiedlich stark kontaktiert und/oder abschnittsweise nicht kontaktiert. Hierzu umfasst die Schaltkontur die die verschiedenen Stellungen der Verriegelungseinheit repräsentierenden Betätigungsabschnitte, die mittels des Abtastelements abtastbar sind, um die verschiedenen Stellungen der Verriegelungseinheit repräsentierende Schaltsignale am Mikroschalter zu erzeugen.

Die Betätigungseinheit kann darüber hinaus beispielsweise einen Steuernocken umfassen, der direkt in Anlage an der Verriegelungseinheit ist. Der Steuernocken dient der Übertragung der momentanen Stellung der Verriegelungseinheit auf die Betätigungseinheit.

Ferner kann die Betätigungseinheit beispielsweise einen schwenkbar angeordneten Betätigungshebel umfassen. Der Betätigungshebel kann insbesondere eingerichtet sein, eine am Steuernocken einwirkende Verstellbewegung der Verriegelungseinheit in eine Betätigungsbewegung der Schaltkontur umzusetzen. Diese Betätigungsbewegung der Schaltkontur kann wiederum von dem Abtastelement in eine Betätigung des mindestens einen Schaltelements des Mikroschalters umgesetzt werden.

Der Betätigungshebel kann ferner beispielsweise federvorgespannt mit der Verriegelungseinheit gekoppelt sein. Insbesondere kann der Betätigungshebel mittels eines Federelements und eines aus der schwenkbaren Lagerung des Betätigungshebels resultierenden Drehmoments gegen die Verriegelungseinheit, zum Beispiel eine Verriegelungsklaue oder eine Verriegelungsplatte, gedrückt werden.

Beispielsweise kann die Betätigungseinheit einen Abtasthebel umfassen. Dabei kann die Schaltkontur an dem Abtasthebel beispielsweise als eine Außenkontur ausgebildet sein. Der Abtasthebel und der Betätigungshebel sind um eine gemeinsame Schwenkachse oder Lagerachse drehbar gelagert. Der Abtasthebel und der Betätigungshebel können eine Montageeinheit, insbesondere eine Betätigungshebelbaugruppe, bilden. Beispielsweise kann die Betätigungshebelbaugruppe eingerichtet sein, dass eine Veränderung der momentanen Stellung der Verriegelungseinheit, zum Beispiel einer Verriegelungsklappe, zu einer Rotation der Betätigungshebelbaugruppe um die Schwenkachse oder Lagerachse führt.

Ein erfindungsgemäßer, insbesondere einfach entnehmbarer Fahrzeugsitz ist mit der zuvor beschriebenen Längsverstelleinrichtung ausgestattet.

Zusammenfassend und mit anderen Worten ausgedrückt ist durch die Erfindung eine Längsverstelleinrichtung bereitgestellt. Die im entnehmbaren Fahrzeugsitz befindliche elektromechanische Betätigung der Verriegelungseinheit (auch Schienenentriegelung genannt) erhält zusätzlich eine Überwachung des Schienenverriegelungsstatus. Dies ist notwendig, da die Schienenverstellung nach Entriegelung via Reibrad erfolgt. Der Fahrzeugsitz verfügt also aus Richtung der Abtriebsseite betrachtet, nicht über eine selbsthemmende Längsverstellung. Für die Regelung der Reibradantriebe ist der Verriegelungsstatus eminent wichtig. Erst nach Schienenverriegelung stoppen die Antriebe. Generell muss der Verriegelungsstatus des Fahrzeugsitzes aus vorgenanntem, sicherheitsrelevantem Grund der nicht vorhandenen Selbsthemmung bekannt sein.

Die Abfrage des Verriegelungsstatus erfolgt über den Mikroschalter, dessen Schaltpositionen über ein weiteres Zwischenelement, insbesondere den Betätigungshebel, eingestellt werden kann. Der Betätigungshebel selbst steht mit Federvorspannung im Kontakt mit der Verriegelungseinheit, zum Beispiel der Entriegelungsklappe der Verriegelungseinheit (auch Schienenverriegelung genannt). Für den Mikroschalter erhält der Betätigungshebel die Schaltkontur oder Steuerkurve, die bei Rotation um die zentrale Lagerachse am Mikroschalter vorbei bewegt wird. Das zum Mikroschalter gehörende Abtastelement, zum Beispiel eine Flachformfeder mit Tastspitze, welche auf der Steuerkurve aufliegt, fragt hierbei taktil die Lage des Betätigungshebels ab.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung nach dem Stand der Technik,
- Fig. 2:: eine Seitenansicht einer Überwachungseinheit für eine Verriegelungseinheit der Längsverstelleinrichtung, wobei sich die Verriegelungseinheit in einem entriegelten Zustand befindet,
- Fig. 3:: eine Seitenansicht einer Überwachungseinheit für eine Verriegelungseinheit der Längsverstelleinrichtung, wobei sich die Verriegelungseinheit in einem Verriegelungszustand befindet,
- Fig. 4:: eine Seitenansicht einer Überwachungseinheit für eine Verriegelungseinheit der Längsverstelleinrichtung, wobei sich die Verriegelungseinheit im Verriegelungszustand befindet und die Betätigungseinheit zur Entnahme des Fahrzeugsitzes angehoben ist,
- Fig. 5:: schematisch einen vergrößerten Ausschnitt der Überwachungseinheit im Abtastbereich von Schaltkontur und Abtastelement eines Mikroschalters,
- Fig. 6:: den vergrößerten Ausschnitt nach Figur 5 in einer Zwischenstellung zwischen dem entriegelten Zustand und dem Verriegelungszustand der Betätigungseinheit,
- Fig. 7:: den vergrößerten Ausschnitt nach Figur 5 im Verriegelungszustand der Betätigungseinheit,
- Fig. 8:: den vergrößerten Ausschnitt nach Figur 5 im angehobenen Zustand der Betätigungseinheit, und
- Fig. 9:: den vergrößerten Ausschnitt nach Figur 5 im angehobenen Zustand der Betätigungseinheit.

Einander entsprechende Teile sind in allen Figuren mit den gleichen Bezugszeichen versehen.

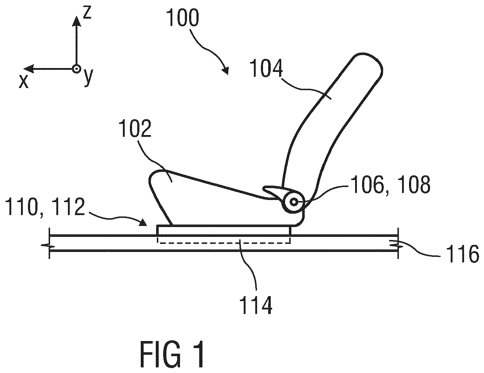

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 und das Sitzteil 102 können beispielsweise über lösbare Befestigungen miteinander verbunden sein. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist in der Unterschiene 116, insbesondere einer gegenüber der Oberschiene 114 längeren Unterschiene 116, beweglich angeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

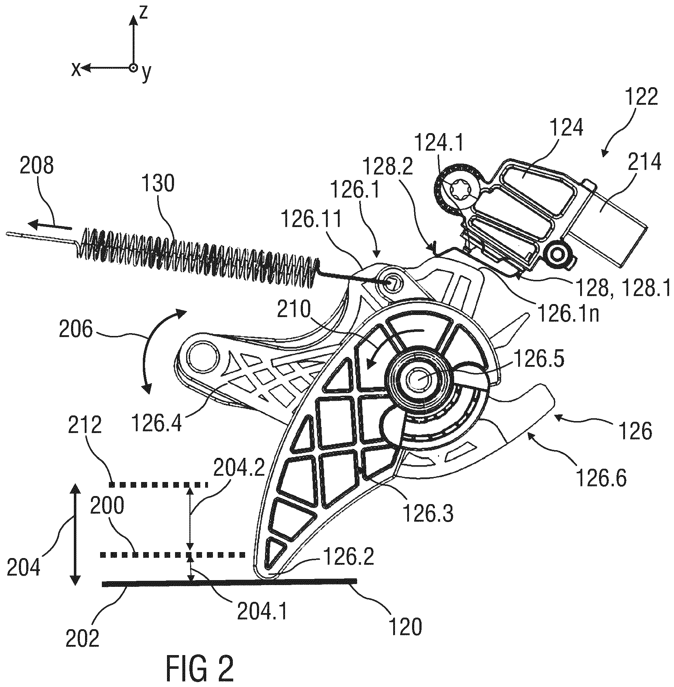

Zur lösbaren Verriegelung der Oberschiene 114 mit der Unterschiene 116 ist eine Verriegelungseinheit 120, zum Beispiel eine Verriegelungsplatte oder eine Verriegelungsklaue, vorgesehen. Die Verriegelungseinheit 120 ist dazu ausgebildet, die Oberschiene 114 und die Unterschiene 116 miteinander in einer Verriegelungsstellung 200 (dargestellt in Figur 2) zu verriegeln oder zur Verstellung der Oberschiene 114 relativ zur Unterschiene 116 aus der Verriegelungsstellung 200 freizugeben und in eine entriegelte Stellung 202 (dargestellt in Figur 2) zu bewegen.

Figur 2 zeigt eine Seitenansicht einer Überwachungseinheit 122 für die Verriegelungseinheit 120 der Längsverstelleinrichtung 110.

Die Verriegelungseinheit 120 befindet sind in der entriegelten Stellung 202.

Die Überwachungseinrichtung 122 ist ausgebildet und eingerichtet, zu überwachen, ob sich die Verriegelungseinheit 120 in der Verriegelungsstellung 200 befindet oder ob sich die Verriegelungseinheit 120 in einer entriegelten Stellung 202 befindet. Die Längsverstelleinrichtung 110 ist beispielsweise mit einem Reibradantrieb für eine motorisch angetriebene Verstellung der Oberschiene 114 gekoppelt.

Der Verriegelungsstatus der Verriegelungseinheit 120 ist insbesondere für einen als Reibradantrieb ausgebildeten Antrieb von Bedeutung, da ein solch angetriebener Fahrzeugsitz aus Richtung einer Abtriebsseite gesehen nicht über eine selbsthemmende Längsverstellung verfügt. Für die Steuerung und Regelung eines solchen Reibradantriebs ist die Erfassung des aktuellen Verriegelungszustands der Verriegelungseinheit 120 notwendig.

Die Überwachungseinheit 122 kann beispielsweise einen Mikroschalter 124 umfassen. Der Mikroschalter 124 ist über eine Betätigungseinheit 126 mit der Verriegelungseinheit 120 gekoppelt.

Die Betätigungseinheit 126 ist beispielsweise eingerichtet, in Abhängigkeit von dem Verriegelungszustand der Verriegelungseinheit 120 ein Abtastelement 128 des Mikroschalters 124 zu betätigen. Dabei steht die Betätigungseinheit 126 beispielsweise einerseits direkt in Anlage an der Verriegelungseinheit 120, zum Beispiel einer Verriegelungsklappe, einer Verriegelungsklaue oder einer Verriegelungsplatte oder dergleichen. Andererseits steht die Betätigungseinheit 126 beispielsweise direkt mit dem Mikroschalter 124 in Wechselwirkung.

Beispielsweise kann der Mikroschalter 124 als ein einfacher, zwei oder mehr Schaltzustände aufweisender Schalter ausgebildet sein. Insbesondere kann der Mikroschalter 124 als ein Drucktaster, ein Einfachschalter oder ein Umschaltschalter ausgebildet sein. Beispielsweise kann der Mikroschalter 124 ständig bestromt sein, wobei unterschiedlich große Schaltwiderstände vorgesehen sind, die jeweils einen Schaltzustand repräsentieren. Der Mikroschalter 124 kann eine eigene Sensorelektronik mit Funktionsüberwachung umfassen. Bei einem Sensorausfall detektiert die Sensorelektronik einen unendlichen großen Widerstand.

Der Mikroschalter 124 kann beispielsweise einen in Richtung des Fahrzeugsitzes 100 weisenden Kontaktanschluss umfassen. Dadurch kann der Mikroschalter 124 direkt mit einer Sitzelektronik des Fahrzeugsitzes 100 oder einem Steuergerät elektrisch verbunden werden oder sein, insbesondere wenn die Oberschiene 114 mit dem Fahrzeugsitz 100 verbunden wird beziehungsweise ist.

Betätigungseinheit 126 kann insbesondere dazu eingerichtet sein, Schaltpositionen des Mikroschalters 124 einzustellen.

Die Betätigungseinheit 126 kann beispielsweise eine Schaltkontur 126.1 umfassen. Die Schaltkontur 126 (auch Steuerkurve oder Steuerkontur genannt) kann beispielsweise eine Anzahl von Betätigungsabschnitten 126.11 bis 126.1n aufweisen. Die Betätigungsabschnitte 126.11 bis 126.1n stehen direkt in Wechselwirkung mit dem Mikroschalter 124, insbesondere mit dessen Abtastelement 128.

Die Betätigungsabschnitte 126.11 bis 126.1n sind insbesondere eingerichtet, eine momentane Stellung der Verriegelungseinheit 120 zu repräsentieren. Mit anderen Worten: Jedem Betätigungsabschnitt 126.11 bis 126.1n ist eine momentane Stellung der Verriegelungseinheit 120 zugeordnet.

Das Abtastelement 128 des Mikroschalters 124 ist insbesondere als ein flexibles Abtastelement 128 ausgebildet, welches die Schaltkontur 126.1 zur gesteuerten Betätigung des Mikroschalters 124 abtastet. Bei einer Betätigung der Verriegelungseinheit 120 wird beispielsweise die Schaltkontur 126.1 am Mikroschalter 124, insbesondere an dessen flexiblem Abtastelement 128, vorbeibewegt.

Das flexible Abtastelement 128, welches direkt an der Schaltkontur 126.1 anliegt, fragt über die Betätigungsabschnitte 126.11 bis 126.1n der Schaltkontur 126.1 die momentane Stellung der Verriegelungseinheit 120 indirekt ab.

Das flexible Abtastelement 128 kann beispielsweise als ein Federelement 128.1, insbesondere ein Federarm oder ein Federhebel, ausgebildet sein. Beispielsweise kann das Federelement 128.1 als eine Flachformfeder oder Bandfeder ausgebildet sein. Insbesondere kann das Federelement 128.1 als eine Bogenfeder ausgebildet sein. Zur Erzielung der Abtastfunktion kann das Federelement 128.1 als eine Rückstellfeder ausgebildet sein.

Beispielsweise kann das Abtastelement 128 an einem vom Mikroschalter 124 abgewandten Ende eine Abtastspitze 128.2 aufweisen. Die Abtastspitze 128.2 kann beispielsweise s-förmig, u-förmig oder als ein gebogener Vorsprung ausgebildet sein. Ein der Abtastspitze 128.1 gegenüberliegendes Ende des Abtastelements 128 kann ortsfest ausgebildet sein. Beispielsweise kann das ortsfeste Ende mit dem Mikroschalter 124 gekoppelt, insbesondere an diesem befestigt, sein. Die Abtastspitze 128.2 und das Federelement 128.1 können insbesondere derart eingerichtet sein, dass beim Niederdrücken der Abtastspitze 128.2 beim Überstreichen der Schaltkontur 126.1 das Federelement 128.1 in Richtung eines Schaltelements 124.1 des Mikroschalters 124 bewegbar, insbesondere drückbar, ist. Dabei kontaktiert das Federelement 128.1 mit diesem Schaltelement 124.1 des Mikroschalters 124. Insbesondere gelangen diese in Kontakt oder Eingriff und das Schaltelement 124.1 wird betätigt.

Die Schaltkontur 126.1 kann beispielsweise derart ausgebildet sein, dass das Abtastelement 128 bei einem Verstellen der Verriegelungseinheit 120 abschnittsweise unterschiedlich stark kontaktiert und/oder abschnittsweise nicht kontaktiert. Hierzu umfasst die Schaltkontur 126.1 die verschiedene Stellungen der Verriegelungseinheit 120 repräsentierenden Betätigungsabschnitte 126.11 bis 126.1n, die mittels des Abtastelements 128 abtastbar sind, um die verschiedenen Stellungen der Verriegelungseinheit 120 repräsentierende Schaltsignale am Mikroschalter 124 zu erzeugen.

Die Betätigungseinheit 126 kann darüber hinaus beispielsweise einen Steuernocken 126.2 umfassen, der direkt in Anlage an der Verriegelungseinheit 120 ist. Der Steuernocken 126.2 dient der Übertragung der momentanen Stellung der Verriegelungseinheit 120 auf die Betätigungseinheit 126.

Die Betätigungseinheit 126 kann beispielsweise einen schwenkbar angeordneten Betätigungshebel 126.3 (auch Umsetzhebel genannt) umfassen. Der Betätigungshebel 126.3 kann insbesondere eingerichtet sein, eine am Steuernocken 126.2 einwirkende Verstellbewegung 204 der Verriegelungseinheit 120 in eine Betätigungsbewegung 206 der Schaltkontur 126.1 umzusetzen. Die Verstellbewegung 204 der Verriegelungseinheit 120 repräsentiert eine Veränderung der Position oder Stellung der Verriegelungseinheit 120. Ein erster Verstellabschnitt 204.1 repräsentiert eine Verstellung der Verriegelungseinheit 120 von der entriegelten Stellung 202, in welcher die Oberschiene 114 relativ zur Unterschiene 116 verstellbar ist, in die Verriegelungsstellung 200, in welcher die Oberschiene 114 und die Unterschiene 116 miteinander verriegelt sind. Ein zweiter Verstellabschnitt 204.2 repräsentiert die Bewegung der Verriegelungseinheit 120 zusammen mit dem Fahrzeugsitz 100, welcher in eine angehobene Stellung 212 gestellt ist. Die angehobene Stellung 212 markiert beispielhaft die Stellung der Betätigungseinheit 126.

Diese aus der Verstellbewegung 204 resultierende Betätigungsbewegung 206 der Schaltkontur 126.1 kann wiederum von dem Abtastelement 128 in eine Betätigung des mindestens einen Schaltelements 124.1 des Mikroschalters 124 umgesetzt werden.

Der Betätigungshebel 126.3 kann ferner beispielsweise federvorgespannt mit der Verriegelungseinheit 120 gekoppelt sein. Insbesondere kann der Betätigungshebel 126.3 mittels einer Feder 130, insbesondere eine Vorspannfeder, und einer daraus resultierend wirkenden Federkraft 208, insbesondere eine Vorspannkraft, und eines aus der schwenkbaren Lagerung des Betätigungshebels 126.3 resultierenden Drehmoments 210 gegen die Verriegelungseinheit 120, zum Beispiel eine Verriegelungsklaue oder eine Verriegelungsplatte, gedrückt werden.

Beispielsweise kann die Betätigungseinheit 126 einen Abtasthebel 126.4 umfassen. Die Schaltkontur 126.1 kann an dem Abtasthebel 126.4 beispielsweise als eine Außenkontur ausgebildet sein. Der Abtasthebel 126.4 und der Betätigungshebel 126.3 sind um eine gemeinsame Schwenkachse oder Lagerachse 126.5 drehbar gelagert. Der Abtasthebel 126.4 und der Betätigungshebel 126.3 können eine Montageeinheit, insbesondere eine Betätigungshebelbaugruppe 126.6, bilden. Beispielsweise kann die Betätigungshebelbaugruppe 126.6 (auch Auslösebaugruppe genannt) eingerichtet sein, dass eine Veränderung der momentanen Stellung der Verriegelungseinheit 120, zum Beispiel einer Verriegelungsklappe, zu einer Rotation der Betätigungshebelbaugruppe 126.6 um die Lagerachse 126.5 führt.

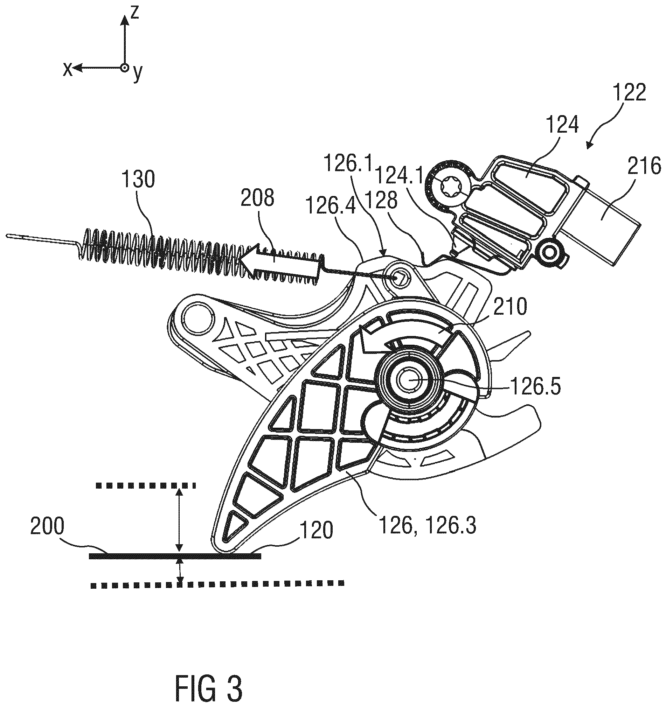

Die Federkraft 208 kann beispielsweise so ausgelegt sein, dass keine Bewegung in der Verriegelungseinheit 120 eingeleitet wird. Insbesondere wirkt die Federkraft 208 auf die Kontaktkräfte des Federelements 128.1 des Mikroschalters 124. Der Abtasthebel 126.4 der Betätigungshebelbaugruppe 126.6 verfügt über eine Steuerkurve, die Schaltkontur 126.1, die im Kontakt mit dem beispielsweise als Flachformfeder ausgebildeten Federelement 128.1 steht. Eine Veränderung der Verriegelungsposition der Verriegelungseinheit 120 gemäß Verstellbewegung 204 führt zu einer Rotation der Betätigungshebelbaugruppe 126.6 um die Lagerachse 126.5. Hierbei wird auch die Lage der Abtastspitze 128.2, die in Kontakt mit der Schaltkontur 126.1 (auch Steuerkurve genannt) steht, aufgrund der Bewegung der Schaltkontur 126.1 relativ zum Abtastelement 128 verändert. Je nach Drehwinkel der Betätigungshebelbaugruppe 126.6 wird hierbei der Schaltzustand des Mikroschalters 124 verändert. Beispielsweise kann sich durch entsprechende Betätigung der Widerstandswert des Mikroschalters 124 ändern. Je nach Schaltzustand kann zum Beispiel ein geschalteter Zustand (= "1") des Mikroschalters 124 einem geringen Stromwiderstandswert (= "LR", low resistance genannt) oder ein nicht geschalteter Zustand (= "0") einem hohen Stromwiderstandswert (= "HR", high resistance genannt) entsprechen. Der jeweilige Schaltzustand, insbesondere der jeweilige geänderte Stromfluss, infolge von Schalten oder Nichtschalten, wird von einer Steuereinheit ausgewertet und ein entsprechendes niederohmiges Schaltsignal 214 oder hochohmiges Schaltsignal 216 (dargestellt in Figur 3) zur Steuerung und Regelung des Reibradantriebs der Längsverstelleinrichtung 110 erzeugt.

Bei entriegelten Schienenelementen 114, 116 bis hin zum Grenzfall der Verriegelung, insbesondere einer Zwischenposition im ersten Verstellabschnitt 204.1 zwischen der Verriegelungsstellung 200 und der entriegelten Stellung 202, in welcher weder die eine noch die andere Stellung eingenommen ist und die Verriegelungseinheit nicht in eine Rastaufnahme oder Ausnehmung der Verriegelung eingefallen ist, wird, wie Figur 2 zeigt, aufgrund der veränderten Lage der Schaltkontur 126.1 infolge der Drehung des Betätigungshebelbaugruppe 126.6 der Mikroschalter 124 über das aufgrund der Form der Schaltkontur 126.1 betätigte, insbesondere verschwenkte, Abtastelement 128 das Schaltelement 124.1 betätigt, insbesondere niedergedrückt und beispielsweise ein entsprechendes niederohmiges Schaltsignal 214 erzeugt und an die Steuereinheit zur Steuerung des Reibradantriebs weitergegeben.

Figur 3 zeigt eine Seitenansicht die Überwachungseinheit 122 für die Verriegelungseinheit 120, die sich im Verriegelungszustand und damit in der Verriegelungsstellung 200 befindet.

In der Verriegelungsstellung 200 wird über die Federkraft 208 der Feder 130 ein Drehmoment 210 auf den Betätigungshebel 126.3 ausgeübt, wodurch dieser auf die Verriegelungseinheit 120 in verriegelter Position 200 gedrückt wird. Das Schaltelement 124.1 des Mikroschalters 124 wird aufgrund der Lage des Abtastelements 128 an der Schaltkontur 126.1 des Abtasthebels 126.4 nicht betätigt. Der Mikroschalter 124 erzeugt ein entsprechendes hochohmiges Schaltsignal 216.

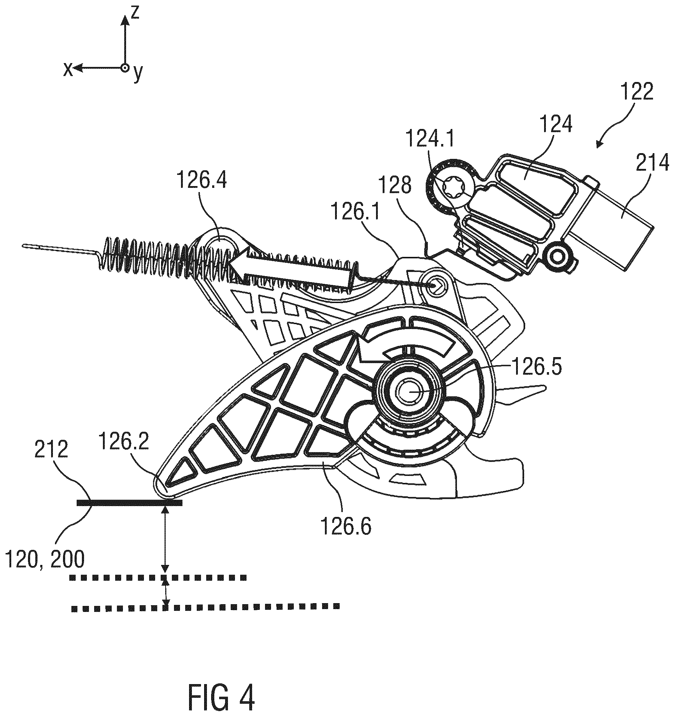

Figur 4 zeigt eine Seitenansicht der Überwachungseinheit 122 für die Verriegelungseinheit 120, die sich weiterhin im Verriegelungszustand und der Verriegelungsstellung 200 befindet, wobei gleichzeitig die Betätigungseinheit 126 während der Entnahme des Fahrzeugsitzes 100 angehoben wird. Somit befindet sich die Betätigungseinheit 126 beispielhaft in der angehobenen Stellung 212.

Auch für den angehobenen Zustand der Betätigungshebelbaugruppe 126.6, insbesondere den angehobenen oder geschwenkten Zustand des Abtasthebels 126.4, wird das niederohmige Schaltsignal 214 ausgegeben, da die Schaltkontur 126.1 (auch Steuerkurve, Abtastkurve oder Betätigungskurve genannt) mit ihrer spezifischen Geometrie in die andere Richtung verschwenkt wurde. Aufgrund der veränderten Lage der Schaltkontur 126.1 infolge der Drehung des Betätigungshebelbaugruppe 126.6 wird das Abtastelement 128 betätigt, insbesondere in Richtung des Schaltelements 124.1, gedrückt, so dass wiederum das Schaltelement 124.1 betätigt, insbesondere gedrückt wird und ein entsprechendes niederohmiges Schaltsignal 214 erzeugt und an die Steuereinheit zur Steuerung des Reibradantriebs weitergegeben wird.

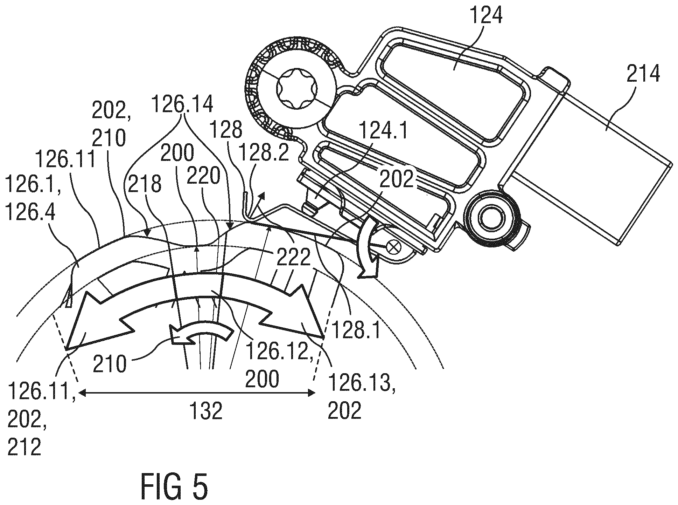

Figur 5 zeigt schematisch einen vergrößerten Ausschnitt der Überwachungseinheit 122 im Abtastbereich 132 von Schaltkontur 126.1 und Abtastelement 128 des Mikroschalters 124.

Die Überwachungseinheit 122, insbesondere die Wechselwirkung von der Betätigungshebelbaugruppe 126.6 und Mikroschalter 124 und Verriegelungseinheit 120, ermöglicht, eine momentane Stellung der Verriegelungseinheit 120, insbesondere deren Verriegelungsstellung 200, deren entriegelte Stellung 202, deren angehobene Stellung 212 oder eine Zwischenstellung, genau zu detektieren.

Jedem Betätigungsabschnitt 126.11 bis 126.1n ist eine momentane Stellung der Verriegelungseinheit 120 zugeordnet:
Beispielsweise kann ein erster Betätigungsabschnitt 126.11 ausgebildet sein, den Mikroschalter 124 zu betätigen, wenn die Verriegelungseinheit 120 sich in der Verriegelungsstellung 200 befindet und gleichzeitig die Betätigungseinheit 126, insbesondere ein Betätigungshebel, in die angehobene Stellung 212 bewegt ist, wenn der Fahrzeugsitz 100 ausgebaut wird oder ausgebaut ist. Beispielsweise ist der erste Betätigungsabschnitt 126.11 als ein Vorsprung oder eine Erhöhung in der Schaltkontur 126.1 ausgebildet.

Ein zweiter Betätigungsabschnitt 126.12 kann ausgebildet sein, den Mikroschalter 124 nicht zu betätigen, wenn sich die Verriegelungseinheit 120 in der Verriegelungsstellung 200 befindet. Beispielsweise ist der zweite Betätigungsabschnitt 126.12 als eine Vertiefung in der Schaltkontur 126.1 ausgebildet.

Ein dritter Betätigungsabschnitt 126.13 kann ausgebildet sein, den Mikroschalter 124 zu betätigen, wenn die Verriegelungseinheit 120 sich in der entriegelten Stellung 202 befindet. Beispielsweise ist der dritte Betätigungsabschnitt 126.13 als ein Vorsprung oder eine Erhöhung in der Schaltkontur 126.1 ausgebildet. Dabei können der erste Betätigungsabschnitt 126.11 und der dritte Betätigungsabschnitt 126.13 identische Abmessungen, speziell den gleichen Abtastradius um die Rotationsachse der Betätigungseinheit aufweisen.

Ein vierter Betätigungsabschnitt 126.14 kann ausgebildet sein, den Mikroschalter 124 zu betätigen oder dessen Betätigungsstatus beizubehalten, wenn die Verriegelungseinheit 120 sich in einer Zwischenstellung zwischen der Verriegelungsstellung 200 und der entriegelten Stellung 202 befindet. Beispielsweise liegt eine solche Zwischenstellung (auch nicht aktive Entriegelung oder nicht aktive Verriegelung) vor, wenn die Längsverstellung beendet werden soll und eine Verriegelungsstellung 200 (auch Verriegelungsposition genannt) nicht exakt angefahren wurde. In einer solchen Zwischenstellung kann die Verriegelungseinheit 120 die Oberschiene 114 und die Unterschiene 116 nicht sicher verriegeln, insbesondere kann ein Verriegelungselement, zum Beispiel eine Verriegelungsklaue oder eine Verriegelungsplatte nicht in eine korrespondierende Verriegelungsaufnahmeöffnung einfallen. Auch eine solche Zwischenstellung ist mittels der Überwachungseinheit 122 erkennbar und der Mikroschalter 124 ist entsprechend betätigbar oder bleibt in dem aktuellen Betätigungsstatus und erzeugt ein Signal zum Beispiel für die entriegelte Stellung 202 der Oberschiene 114.

Für eine solche Detektion ist die Schaltkontur 126.1 (auch Schaltkurve, Steuerkurve oder dergleichen genannt) derart eingerichtet, dass abgestimmt auf mögliche Toleranzen, in einem ersten Übergang von zwischen dem ersten Betätigungsabschnitt 126.11 und dem zweiten Betätigungsabschnitt 126.12 ein erster Umschaltpunkt 218 und in einem zweiten Übergang zwischen dem zweiten Betätigungsabschnitt 126.12 und dem dritten Betätigungsabschnitt 126.13 eine zweiter Umschaltpunkt 220 zur Betätigung des Mikroschalters 124 vorgesehen ist.

Zur möglichst genauen Detektion der Verriegelungsstellung 200 sind die Umschaltpunkte 218, 220 von erkannter Verriegelung zu einem nicht verriegelten Zustand oder umgekehrt derart gewählt, dass diese so nah wie möglich am Steuerkurvenbereich der verriegelten Schienenelemente 114, 116 und damit so nah wie möglich an der Verriegelungsstellung 200 liegen.

Dargestellt ist in Figur 5, dass die Verriegelungseinheit 120 entriegelt und somit die Oberschiene 114 aktiv entriegelt ist. Das bedeutet, dass ein Sitzpositionseinstellvorgang, insbesondere eine Längsverstellung, des Fahrzeugsitzes 100 eingeleitet werden kann oder wurde und die Schienenentriegelung und somit die Verriegelungseinheit 120 komplett betätigt wurde und sich in der entriegelten Stellung 202 befindet. Hierbei wird der Betätigungshebel 126.3 (dargestellt in Figur 2) maximal verschwenkt, um sicher zu entriegeln.

Das beispielsweise als Flachformfeder ausgebildete flexible Abtastelement 128 mit seiner Abtastspitze 128.2 liegt in der Folge auf dem dritten Betätigungsabschnitt 126.13 für die entriegelte Stellung 202 und damit auf der Schaltkontur 126.1 im äußeren Bereich (= größter Radius) auf. Das Federelement 128.1 des Abtastelements 128 ist maximal eingedrückt. Hierdurch wird oder ist das Schaltelement 124.1 des Mikroschalters 124 gemäß Pfeil 222 betätigt und erzeugt das niederohmige Schaltsignal 214, welches auf nicht verriegelte Schienenelemente 114, 116 und somit die entriegelte Stellung 202 hinweist.

Analog kann eine solche Signalerzeugung im ersten Betätigungsabschnitt 126.11 für den Fall einer angehobenen Betätigungseinheit 126 erfolgen, wenn der Fahrzeugsitz 100 ausgebaut ist oder wird und gleichzeitig sich die Verriegelungseinheit 120 in der Verriegelungsstellung 200 befindet. Letzteres kann nur durch eine eingeschränkte Beweglichkeit der Betätigungshebelbaugruppe 126.6 (dargestellt in Figur 2) nach Wiedereinbau des Fahrzeugsitzes 100 auftreten, welche somit auch von der Überwachungseinheit erfasst werden kann.

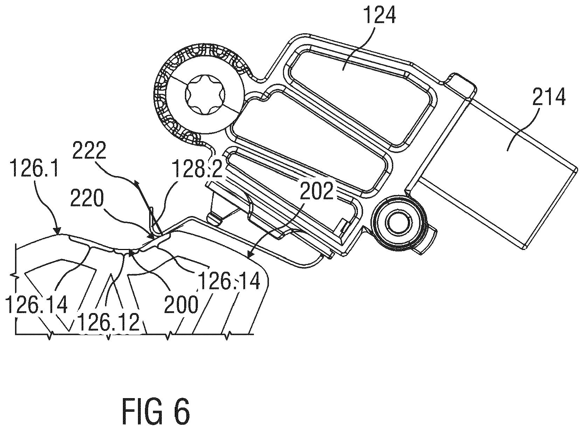

Figur 6 zeigt den vergrößerten Ausschnitt nach Figur 5 in einer Zwischenstellung zwischen dem entriegelten Zustand 202 und dem Verriegelungszustand 200 am zweiten Umschaltpunkt 220.

Eine nicht "aktive Entriegelung" liegt dann vor, wenn die Sitzverstellung beendet werden soll und eine Verriegelungsposition und damit die Verriegelungsstellung 200 nicht exakt angefahren wurde und die Verriegelungseinheit 120 sich in der Zwischenstellung befindet im Bereich des zweiten Umschaltpunktes 220.

Hierbei kann die Verriegelungseinheit 120 nicht in das vorgesehene Verriegelungslochbild der Schienenelemente 114, 116 einfallen. Eine Entriegelungsklappe der Verriegelungseinheit 120 kann sich nicht komplett in die Ausgangslage des verriegelten Zustands oder der Verriegelungsstellung 200 (auch "Track locked" genannt) zurückbewegen. Die über die Federkraft der Feder 130 in Richtung der Verriegelungseinheit 120 gedrückte Betätigungshebelbaugruppe 126.6 (dargestellt in Figur 2) und damit der dadurch an der Verriegelungseinheit 120 aufliegende Steuernocken 126.2 des Betätigungshebels 126.3 (dargestellt in Figur 2) können somit nicht die Ausgangsstellung, insbesondere die Verriegelungsstellung 200, einnehmen.

Dieser Grenzfall ist in Figur 6 gezeigt. Die Abtastspitze 128.2 ist im Bereich des zweiten Umschaltpunktes 220 (auch "limit to lock" genannt). Der Mikroschalter 124 und das Abtastelement 128 können derart wechselwirkend eingerichtet sein, dass der Mikroschalter 124 nur so weit gemäß Pfeil 222 eingedrückt wird, dass das niederohmige Schaltsignal 214 für die noch entriegelten und noch nicht verriegelten Schienenelemente 114, 116 erzeugt wird und ausgelesen oder an eine Steuereinheit weitergeleitet werden kann.

Sobald die Verriegelungseinheit 120 aufgrund des weiter angetriebenen Fahrzeugsitzes 100 einfallen kann, bewegt sich der Betätigungshebel 126.3 in seine Ausgangslage der Verriegelungsstellung 200. Hierbei wird der zweite Umschaltpunkt 220 der Schaltkontur 126.1 überfahren und der Mikroschalter 124 nicht mehr betätigt, so dass dieser das Signal wechselt und das hochohmige Schaltsignal 216 erzeugt wird. In diesem Moment kann der Vortrieb des Fahrzeugsitzes 100 über die Reibradantriebe gestoppt und beendet werden.

Der erste Umschaltpunkt 218 liegt auf der Schaltkontur 126.1 in der anderen Drehrichtung des Betätigungshebels 126.3. Er wird bei Entnahme des Fahrzeugsitzes 100 überfahren. Dies ist für die Auswertung während der Entnahme ohne Relevanz, da die Stromversorgung des entnommenen Fahrzeugsitzes 100 unterbrochen ist und diese Information nicht ausgewertet wird.

Wie oben schon beschrieben, kann aber nach Einbau durch Fehler der Betätigungshebel 126.3 möglicherweise nicht in die Ausgangslage der Verriegelungsstellung 200 verschwenken. In diesem Falle wird dann auch das niederohmige Schaltsignal 214 (= Signal "LR") erzeugt und an die wieder bestromte Sitzsteuereinheit weitergegeben.

Dieses niederohmige Schaltsignal 214 nach der Wieder-Bestromung des Fahrzeugsitzes 100 (zum Beispiel nach einem "Blackout") kann zusätzlich als Auslöser für Prüfroutinen verwendet werden, um die Funktionsfähigkeit des Betätigungsmechanismus und der Längsverstelleinrichtung 110 sowie der Überwachungseinheit 122 zu überprüfen.

Die Auslegung der Schaltkontur 126.1 wurde unter Berücksichtigung der Umschaltpunkte 218, 220 derart ausgelegt, dass die über die Federkraft 208 der Feder 130 erzeugten Drehmomente 210 (dargestellt in Figur 3) und auch die bei Rotation erzeugten Reibmomente maximal klein werden. Diese sind für die Auslegung der Federkraft 208, insbesondere einer Zugfederkraft, der Feder 130, insbesondere einer Zugfeder, elementar, da diese den Betätigungshebel 126.3 immer gegen die Verriegelungseinheit 120, insbesondere gegen eine Entriegelungsklappe der Schienenentriegelung, drücken muss, ohne diese bereits niederzudrücken, was einer Vorentriegelung gleichkäme und aus Sicherheitsgründen vermieden werden muss.

Mit anderen Worten: Die die Zwischenstellungen repräsentierenden Betätigungsabschnitte 126.14 (auch Übergangsbereiche oder Umschaltbereiche genannt) der Schaltkontur 126.1 weisen eine vorgegebene Neigung auf. Diese Neigung kann beiderseits des tiefsten Punktes zu dem die Verriegelungsstellung 200 repräsentierenden Betätigungsabschnitt 126.12 (= verriegelte Schienenelemente 114, 116) unterschiedlich steil sein. Für optimale Kraftverhältnisse (wiederum die Balance zwischen Zugfeder und Flachformfeder im Kontakt mit Schaltkontur) sollte es zu keinen wesentlichen Unterschieden der Betätigungskraft des Mikroschalters 124 kommen. Die Anordnung der Flachformfeder des Abtastelements 128 bewirkt für die eine Drehrichtung entlang der Neigung des einen Betätigungsabschnitts 126.14 eine einfache Betätigung (= Kraftvektorrichtung in Bezug auf virtuellen Drehpunkt der Flachformfeder) und in der anderen Drehrichtung entlang der Neigung des anderen Betätigungsabschnitts 126.14 eine Erhöhung der Kraftwirkung. Die Schrägen oder Neigungen der beiden entgegengesetzt verlaufenden Betätigungsabschnitte 126.14, insbesondere v-förmig verlaufende Abschnitte, sind so gewählt, dass der Kraftunterschied möglichst gering wird oder ist.

Beispielsweise können die Bestätigungsabschnitte 126.14 auf die im Kontakt der Abtastspitze 128.2 wirkenden Kräfte derart ausgelegt sein, dass die Betätigungskraft zur Betätigung des Abtastelements 128 in beiden schrägen oder geneigten Betätigungsabschnitten 126.14 angeglichen ist. Hierdurch kann die Genauigkeit der Überwachungseinheit 122 sichergestellt werden. Je höher die Kräfte desto höher die Genauigkeit. Dabei wird eine solche Kraft und somit eine solche Schräge der Betätigungsabschnitte 126.14 gewählt, die eine starke Abnutzung des Abtastelements 128 reduziert oder vermeidet, um eine hinreichend lange Lebensdauer zu ermöglichen.

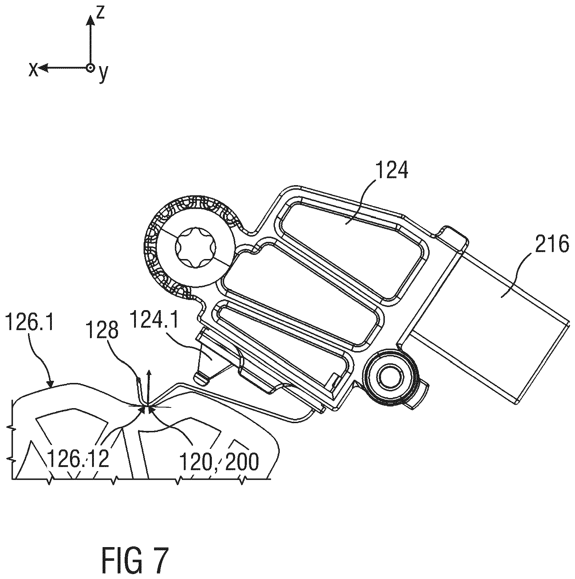

Figur 7 zeigt den vergrößerten Ausschnitt nach Figur 5 im Verriegelungszustand. Die Verriegelungseinheit 120 ist in der Verriegelungsstellung 200. Das Abtastelement 128 ist im zweiten Betätigungsabschnitt 126.12 eingefallen und außer Eingriff vom Schaltelement 124.1 des Mikroschalters 124. Der Mikroschalter 124 wird nicht betätigt und erzeugt das hochohmige Schaltsignal 216.

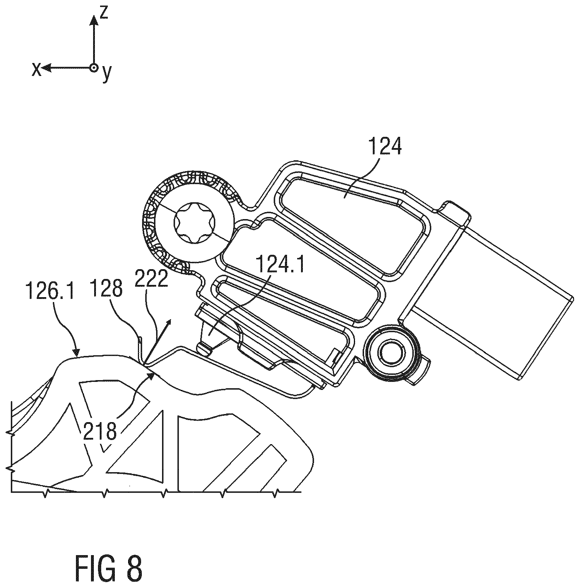

Figur 8 zeigt den vergrößerten Ausschnitt nach Figur 5 in einer Zwischenstellung im Bereich des ersten Umschaltpunktes 218. Der erste Umschaltpunkt 218 liegt auf der Schaltkontur 126.1 in der anderen Drehrichtung des Betätigungshebels 126.3 (dargestellt in Figur 3). Er wird von dem Abtastelement 128 des Mikroschalters 124 bei Entnahme des Fahrzeugsitzes 100 (dargestellt in Figur 1) überfahren. Dabei kommt es infolge der Druckkraft gemäß Pfeil 222 zu einem Niederdrücken des Abtastelements 128, das wiederum das Schaltelement 124.1 betätigt, wie zuvor beschrieben.

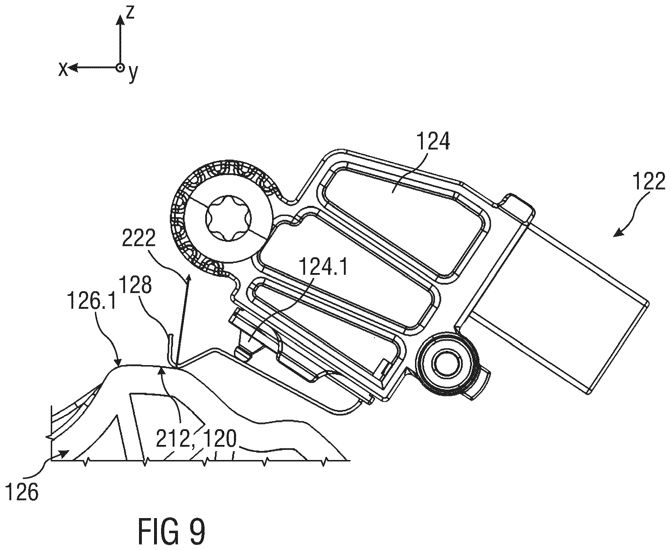

Figur 9 zeigt den vergrößerten Ausschnitt nach Figur 5 im angehobenen Zustand, in welcher der Fahrzeugsitz 100 mit der Betätigungseinheit 126 und der Überwachungseinheit 122 von der Längsverstelleinrichtung 110 und damit von den Schienenelementen 114, 116 (dargestellt in Figur 1) entnommen ist oder wird und sich die Betätigungseinheit 126 in der angehobenen Stellung 212 befindet. Das Abtastelement 128 wird weiterhin aufgrund der Schaltkontur 126.1 gemäß Pfeil 222 in Richtung des Schaltelements 124.1 gedrückt und betätigt dieses, wie zuvor beschrieben.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 114: Erstes Schienenelement (Oberschiene)
- 116: Zweites Schienenelement (Unterschiene)

- 120: Verriegelungseinheit
- 122: Überwachungseinheit
- 124: Mikroschalter
- 124.1: Schaltelement
- 126: Betätigungseinheit
- 126.1: Schaltkontur
- 126.11 bis 126.1n: Betätigungsabschnitt
- 126.2: Steuernocken
- 126.3: Betätigungshebel
- 126.4: Abtasthebel
- 126.5: Lagerachse
- 126.6: Betätigungshebelbaugruppe

- 128: Abtastelement
- 128.1: Federelement
- 128.2: Abtastspitze

- 130: Feder
- 132: Abtastbereich
- 200: Verriegelungsstellung
- 202: entriegelte Stellung
- 204: Verstellbewegung
- 204.1: erster Verstellabschnitt
- 204.2: zweiter Verstellabschnitt
- 206: Betätigungsbewegung
- 208: Federkraft
- 210: Drehmoment
- 212: angehobene Stellung
- 214: niederohmiges Schaltsignal
- 216: hochohmiges Schaltsignal
- 218: erster Umschaltpunkt
- 220: zweiter Umschaltpunkt
- 222: Pfeil

- x: Längsrichtung
- y: Querrichtung
- z: Vertikalrichtung

## Patentansprüche

1. Längsverstelleinrichtung (110) für einen Fahrzeugsitz (100), umfassend zumindest eine Schienenanordnung (112) mit einer festen Unterschiene (116) und einer zur Unterschiene (116) verstellbaren Oberschiene (114) sowie einer Verriegelungseinheit (120) zur lösbaren Verriegelung der Oberschiene (114) mit der Unterschiene (116),
wobei die Verriegelungseinheit (120) dazu ausgebildet ist, die Oberschiene (114) und die Unterschiene (116) miteinander in einer Verriegelungsstellung (200) zu verriegeln oder zur Verstellung der Oberschiene (114) relativ zur Unterschiene (116) aus der Verriegelungsstellung (200) freizugeben, und
wobei eine Überwachungseinheit (122) vorgesehen und zur Überwachung der Verriegelungsstellung (200) der Verriegelungseinheit (120) eingerichtet ist.

2. Längsverstelleinrichtung (110) nach Anspruch 1,
wobei die Überwachungseinrichtung (122) eingerichtet ist, zu überwachen, ob sich die Verriegelungseinheit (120) in der Verriegelungsstellung (200), in einer entriegelten Stellung (202) oder einer Zwischenstellung befindet.

3. Längsverstelleinrichtung (110) nach Anspruch 1 oder 2,
wobei die Überwachungseinheit (122) einen Mikroschalter (124) umfasst.

4. Längsverstelleinrichtung (110) nach Anspruch 3,
wobei der Mikroschalter (124) über eine Betätigungseinheit (126) mit der Verriegelungseinheit (120) gekoppelt ist.

5. Längsverstelleinrichtung (110) nach Anspruch 4,
wobei die Betätigungseinheit (126) eingerichtet, in Abhängigkeit von einer momentanen Stellung der Verriegelungseinheit (120) ein Abtastelement (128) zu betätigen.

6. Längsverstelleinrichtung (110) nach Anspruch 4 oder 5,
wobei die Betätigungseinheit (126) einerseits direkt in Anlage an der Verriegelungseinheit (120) ist und andererseits direkt mit dem Mikroschalter (124) in Wechselwirkung steht.

7. Längsverstelleinrichtung (110) nach einem der vorhergehenden Ansprüche 4 bis 6,
wobei die Betätigungseinheit (126) eine Schaltkontur (126.1) umfasst, die eine Anzahl von Betätigungsabschnitten (126.11 bis 126.1n) aufweist, welche direkt in Wechselwirkung mit dem Mikroschalter (124) stehen.

8. Längsverstelleinrichtung (110) nach Anspruch 7,
wobei das Abtastelement (128) flexibel ausgebildet ist und eingerichtet ist, die Schaltkontur (126.1) zur gesteuerten Betätigung des Mikroschalters (124) abzutasten.

9. Längsverstelleinrichtung (110) nach einem der Ansprüche 5 bis 8,
wobei das Abtastelement (128) als ein Federarm oder ein Federhebel ausgebildet ist.

10. Längsverstelleinrichtung (110) nach einem der vorhergehenden Ansprüche 4 bis 9,
wobei die Betätigungseinheit (126) einen Steuernocken (126.2) umfasst, der direkt in Anlage an der Verriegelungseinheit (120) ist.

11. Längsverstelleinrichtung (110) nach einem der vorhergehenden Ansprüche 4 bis 10,
wobei die Betätigungseinheit (126) einen schwenkbar angeordneten Betätigungshebel (126.3) umfasst.

12. Längsverstelleinrichtung (110) nach Anspruch 11,
wobei der Betätigungshebel (126.3) einerseits den Steuernocken (126.2) und andererseits die Schaltkontur (126.1) betätigt.

13. Längsverstelleinrichtung (110) nach Anspruch 11 oder 12,
wobei der Betätigungshebel (126.3) federvorgespannt mit der Verriegelungseinheit (120) gekoppelt ist.

14. Längsverstelleinrichtung (110) nach einem der vorhergehenden Ansprüche 7 bis 13,
wobei die Schaltkontur (126.1) an einem Abtasthebel (126.4) als eine Außenkontur ausgebildet ist.

15. Fahrzeugsitz (100) mit einer Längsverstelleinrichtung (110) nach einem der vorhergehenden Ansprüche.
